(19) **Europäisches Patentamt**
**European Patent Office**
**Office européen des brevets**

(11) **EP 2 202 832 B1**

(12) **EUROPEAN PATENT SPECIFICATION**

(45) Date of publication and mention
of the grant of the patent:
**02.11.2011 Bulletin 2011/44**

(51) Int Cl.:
*H01M 8/02* (2006.01)  *C08J 7/18* (2006.01)
*H01B 1/06* (2006.01)  *H01B 13/00* (2006.01)
*H01M 8/10* (2006.01)

(21) Application number: **08792149.0**

(22) Date of filing: **04.08.2008**

(86) International application number:
**PCT/JP2008/063945**

(87) International publication number:
**WO 2009/020086 (12.02.2009 Gazette 2009/07)**

(54) **SOLID POLYMER ELECTROLYTE MEMBRANE, METHOD FOR PRODUCING THE SAME, MEMBRANE-ELECTRODE ASSEMBLY FOR FUEL CELL, AND FUEL CELL**

FESTPOLYMERELEKTROLYTMEMBRAN, VERFAHREN ZU IHRER HERSTELLUNG, MEMBRANELEKTRODENBAUGRUPPE FÜR EINE BRENNSTOFFZELLE UND BRENNSTOFFZELLE

MEMBRANE ÉLECTROLYTE POLYMÉRIQUE SOLIDE, PROCÉDÉ SERVANT À PRODUIRE CELLE-CI, ASSEMBLAGE MEMBRANE-ÉLECTRODE POUR PILE À COMBUSTIBLE ET PILE À COMBUSTIBLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.08.2007 JP 2007207430**
**03.12.2007 JP 2007312051**

(43) Date of publication of application:
**30.06.2010 Bulletin 2010/26**

(73) Proprietor: **Shin-Etsu Chemical Co., Ltd.**
**Tokyo 100-0004 (JP)**

(72) Inventor: **TAKAHASHI, Norifumi**
**Annaka-shi**
**Gunma 379-0195 (JP)**

(74) Representative: **Nash, David Allan**
**Haseltine Lake LLP**
**Redcliff Quay**
**120 Redcliff Street**
**Bristol**
**BS1 6HU (GB)**

(56) References cited:
**WO-A1-2007/086309      JP-A- 2003 346 838**
**JP-A- 2004 051 685      JP-A- 2006 351 244**
**JP-A- 2007 115 535      JP-A- 2007 141 601**
**JP-A- 2007 157 428**

- **DATABASE WPI Week 200425 Thomson Scientific, London, GB; AN 2004-260769 XP002598647 & JP 2003 346838 A (YUASA CORP KK) 5 December 2003 (2003-12-05)**
- **DATABASE WPI Week 200754 Thomson Scientific, London, GB; AN 2007-549241 XP002598652 & JP 2007 115535 A (NITTO DENKO CORP) 10 May 2007 (2007-05-10)**

EP 2 202 832 B1

Printed by Jouve, 75001 PARIS (FR)

**Description**

TECHNICAL FIELD

This invention relates to a solid polymer electrolyte membrane, a method for producing the same, a membrane-electrode assembly for fuel cells using the same, and a fuel cell using the membrane-electrode assembly.

BACKGROUND ART

The enhanced performance of portable information tools including laptop computers, personal digital assistants (PDA), and mobile phones poses a demand for power sources of smaller size and higher capacity. As one promising candidate, direct methanol fuel cells (DMFCs) are greatly expected. DMFC is a fuel cell capable of directly extracting electric energy from chemical reaction of methanol with oxygen and has the advantages of a high volume energy density in theory and possible continuous operation by fuel make-up. For the goal of DMFC in commercial service, the inventor has long been engaged in the development of a polymer electrolyte membrane which is the key component in fuel cells, especially the development of a polymer electrolyte membrane by the radiation grafting method.

In the prior art, fuel cell polymer electrolyte membranes by the radiation grafting method use styrene and similar monomers. However, a fuel cell using a radiation grafted membrane as the electrolyte membrane has the drawback of short lifetime because grafted polymer chains are readily degraded.

Known references pertaining to the present invention are listed below.

Patent Document 1: JP-A 2001-348439
Patent Document 2: JP-A 2002-313364
Patent Document 3: JP-A 2003-062129
Patent Document 4: JP-A 2006-313659

DISCLOSURE OF THE INVENTION

Problem to be Solved by the Invention

An object of the invention is to provide a solid polymer electrolyte membrane having improved oxidation resistance from which a long-life fuel cell can be constructed, a method for producing the solid polymer electrolyte membrane, a fuel cell membrane-electrode assembly using the solid polymer electrolyte membrane, and a fuel cell using the membrane-electrode assembly.

Means for Solving the Problem

Regarding a solid polymer electrolyte membrane according to claim 1 obtained from graft-polymerization of one or more radically polymerizable monomers, the inventor has found that when at least one of the radically polymerizable monomers used in the radiation graft polymerization method is a monofunctional monomer having one alkenyl group and a plurality of aromatic rings, a solid polymer electrolyte membrane having good oxidation resistance is obtainable; that when the aromatic ring is partially sulfonated at a sulfonation factor in a specific range, the solid polymer electrolyte membrane has better oxidation resistance and a high ion conductivity; and that when this solid polymer electrolyte membrane is used as the electrolyte membrane in a fuel cell, the fuel cell has a prolonged lifetime because grafted polymer chains are unsusceptible to degradation.

Accordingly, the present invention provides a solid polymer electrolyte membrane, a method for producing the same, a membrane-electrode assembly for fuel cells, and a fuel cell, as defined in the appended claims.

ADVANTAGEOUS EFFECTS OF INVENTION

When at least one of the radically polymerizable monomers used in the radiation graft polymerization method is a monofunctional monomer having one alkenyl group and a plurality of aromatic rings, a solid polymer electrolyte membrane having good oxidation resistance is obtainable. When this solid polymer electrolyte membrane is used as the electrolyte membrane in a fuel cell, the fuel cell has a prolonged lifetime because grafted polymer chains are unsusceptible to degradation.

BRIEF DESCRIPTION OF DRAWINGS

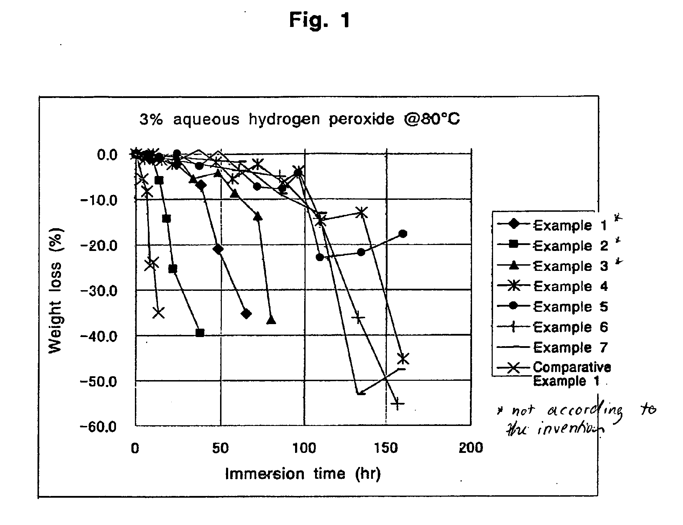

FIG. 1 is a diagram showing the test results of oxidation resistance of Examples 1 to 7 and Comparative Example 1.

DESCRIPTION OF EMBODIMENTS

The solid polymer electrolyte membrane of the invention is obtained by graft-polymerizing a radically polymerizable monomer comprising a monofunctional monomer having one alkenyl group and a plurality of aromatic rings to a resin membrane which is irradiated with radiation.
In preparing a solid polymer electrolyte membrane by graft-polymerizing radically polymerizable monomers to a resin membrane which is irradiated with radiation, it is preferred to employ a method comprising the steps of:

irradiating a resin membrane with radiation,
graft-polymerizing a monofunctional monomer having one alkenyl group and a plurality of aromatic rings alone or a monofunctional monomer having one alkenyl group and a plurality of aromatic rings and another radically polymerizable monomer to the irradiated resin membrane, and
introducing an ion conductive group into the resulting polymer if the radically polymerizable monomer is free of an ion conductive group.

The aromatic ring is partially sulfonated, and a sulfonation factor, defined as the number of sulfonic acid groups divided by the number of aromatic rings grafted, is 0.3-0.7.
The resin membrane used herein is preferably a film or sheet of fluoropolymer. Among the fluoropolymers, polytetrafluoroethylene (PTFE), tetrafluoroethylene-perfluoroalkyl vinyl ether copolymers (PFA), tetrafluoroethylene-hexafluoropropylene copolymers (FEP), and ethylene-tetrafluoroethylene copolymers (ETFE) and the like are preferred since they offer satisfactory membrane physical properties and lend themselves to the radiation graft polymerization method. These resins may be used alone or in proper combination.
Although the thickness of the resin membrane is not particularly limited, a thickness of 10 to 200 $\mu$m is preferred, and a thickness of 20 to 100 $\mu$m is more preferred. Too thin a film may fail whereas too thick a film may have a greater electric resistance, adversely affecting power generation properties.
The resin membrane is first irradiated with radiation at a temperature of 0°C to 50°C, typically room temperature. Examples of radiation include gamma-ray, x-ray, electron beam (EB), ion beam, ultraviolet (UV) radiation, and the like. Inter alia, EB, $\gamma$-ray and UV are preferred, with EB being most preferred. The exposure dose depends on the type of radiation, and the type and thickness of the resin membrane. When a membrane of the foregoing fluoropolymer is irradiated with EB, for example, a dose of 1 to 200 kGy is preferred, with a dose of 1 to 100 kGy being more preferred. Too low an exposure dose may generate less radicals, whereas too high an exposure dose may adversely affect mechanical properties.
Irradiation of radiation is preferably in an inert gas atmosphere such as helium, nitrogen or argon gas. The inert gas preferably has an oxygen concentration of up to 100 ppm, more preferably up to 50 ppm although irradiation need not be necessarily performed in the absence of oxygen.
Once the resin membrane is irradiated with radiation, a radically polymerizable monomer comprising a monofunctional monomer having one alkenyl group and a plurality of, typically 2 to 7 aromatic rings is grafted to the resin membrane. Suitable alkenyl groups include vinyl, allyl, butenyl, pentenyl, hexenyl and heptenyl, with the vinyl being most preferred.
Examples of the monofunctional monomer having one alkenyl group and a plurality of aromatic rings include vinylbiphenyl, vinylnaphthalene, vinylanthracene, phenoxystyrene, allylbiphenyl, allylnaphthalene, allylanthracene, butenylbiphenyl, butenylnaphthalene, butenylanthracene, pentenylbiphenyl, pentenylnaphthalene, pentenylanthracene, hexenylbiphenyl, hexenylnaphthalene, hexenylanthracene, heptenylbiphenyl, heptenylnaphthalene, heptenylanthracene, etc. Inter alia, vinylbiphenyl is preferred because of satisfactory polymerization efficiency and oxidation resistance. The monofunctional monomers having one alkenyl group and a plurality of aromatic rings may be used alone or in proper combination.
The monofunctional monomer having one alkenyl group and a plurality of aromatic rings may be used alone or in combination with another radically polymerizable monomer.
The other radically polymerizable monomer used herein is not particularly limited as long as the monomer has a radical reactive group such as an alkenyl group (e.g., vinyl) in the molecule. Among others, radically polymerizable polyfunctional monomers having two or more radical reactive groups such as alkenyl groups (e.g., vinyl) in the molecule are preferred because a crosslinked structure can be introduced into the graft chain. Examples of the radically polymerizable polyfunctional monomer include divinylbenzene, divinyl ether, triallyl cyanurate, divinyl sulfide, and divinyl sulfoxide. These radically polymerizable polyfunctional monomers may be used alone or in proper combination of two or more.

It is noted that in the embodiment wherein the monofunctional monomer (M1) having one alkenyl group and a plurality of aromatic rings is used in combination with the other radically polymerizable monomer (M2), their proportion may be selected as appropriate, preferably in a molar ratio M1:M2 of 1:0 to 1:10, and more preferably 1:0 to 1:1.

The amount of the radically polymerizable monomer(s) used in grafting to the irradiated resin membrane is preferably 100 to 100,000 parts by weight, more preferably 1,000 to 20,000 parts by weight relative to 100 parts by weight of the resin membrane. Too small an amount of the radically polymerizable monomer may lead to insufficient contact. When used in too large an amount, some radically polymerizable monomer may not be efficiently utilized.

The grafting method is, for example, by immersing the irradiated resin membrane in a solution containing the monofunctional monomer having one alkenyl group and a plurality of aromatic rings and optionally other radically polymerizable monomer, and heating in a nitrogen atmosphere at a temperature of 0° C to 100° C, especially 40° C to 80° C for 1 to 40 hours, especially 4 to 20 hours. A graft rate is preferably 10 to 100%, more preferably 20 to 80%.

Upon graft polymerization of these radical polymerizable monomers, a polymerization initiator such as azobisisobutyronitrile may be used as long as the objects of the invention are not compromised.

A solvent may be used during the graft reaction. Those solvents capable of uniformly dissolving the polymerizable monomer are preferred. Suitable solvents used herein include ketones such as acetone and methyl ethyl ketone, esters such as ethyl acetate and butyl acetate, alcohols such as methyl alcohol, ethyl alcohol, propyl alcohol and butyl alcohol, ethers such as tetrahydrofuran and dioxane, N,N-dimethylformamide, N,N-dimethylacetamide, aromatic hydrocarbons such as benzene, toluene and xylene, aliphatic or alicyclic hydrocarbons such as n-heptane, n-hexane and cyclohexane, and mixtures thereof.

The amount of solvent used is preferably 0 to 1,000 parts by weight, more preferably 0 to 500 parts by weight relative to 100 parts by weight of the monomer. If the monomer is liquid, the solvent may not be used. If the monomer is solid, it is preferred to use the solvent, specifically in an amount of 1 to 1,000 parts by weight, more specifically 1 to 500 parts by weight relative to 100 parts by weight of the monomer. If the amount of solvent used is less than the range, it may be difficult to tailor the number of monomer units in graft chain. A larger amount of the solvent beyond the range may result in a lower graft rate.

In the grafted resin membrane, ion conductive groups may be introduced into graft chains resulting from grafting of the radically polymerizable monomer. Suitable ion conductive groups include sulfonic acid, carboxylic acid, and quaternary ammonium salt groups. Ion conductive groups may be introduced by any well-known techniques. Sulfonation for introducing sulfonic acid groups may be performed by any well-known techniques such as contact with chlorosulfonic acid or fluorosulfonic acid, for example, by immersing the membrane in chlorosulfonic acid in dichloroethane to introduce chlorosulfonic acid groups, thereafter immersing in deionized water to effect hydrolysis for sulfonation.

Sulfonation is performed so as to provide a sulfonation factor (defined below) of up to 0.7 because oxidation resistance is further improved. On the other hand, a sulfonation factor of at least 0.3 provides a high ion conductivity. Accordingly, a sulfonation factor of 0.3 to 0.7, especially 0.4 to 0.7 is preferred. The sulfonation factor is defined:

$$\text{sulfonation factor} = \frac{\text{(number of sulfonic acid groups)}}{\text{(number of aromatic rings grafted)}}.$$

The number of sulfonic acid groups may be determined by acid-base titration, and the number of aromatic rings grafted may be determined from a weight gain before and after grafting.

A sulfonation factor in the range may be established, for example, by suitably adjusting the temperature of sulfonation reaction or the concentration of sulfonating agent. It is believed that the aromatic ring remote from the graft chain is preferentially sulfonated, and the aromatic ring close to the graft chain is free of sulfonic acid group, whereby the oxidation resistance of graft chain is improved.

The electrolyte membrane of the invention is suited for use as the solid polymer electrolyte membrane in fuel cells, specifically direct methanol fuel cells. The membrane-electrode assembly (or electrolyte membrane-electrode assembly) using the inventive electrolyte membrane is constructed by disposing the electrolyte membrane between a catalyst-bearing first electrode and a second electrode (or between fuel and air electrodes) and contiguous to both the electrodes. The electrolyte membrane-electrode assembly may be manufactured by the following procedure.

Electrodes serving as an anode (fuel electrode) and a cathode (air electrode) are joined to the fuel cell electrolyte membrane defined above. Herein, the electrode comprises a porous support and a catalyst layer. For the porous support, carbon paper, carbon cloth or the like is preferably used. Also preferably the catalyst layer comprises a nano-particle catalyst and a proton-conductive polymer electrolyte.

The nano-particle catalysts used herein include platinum group metal nano-particle catalysts and platinum alloy nano-particle catalysts. The platinum group metal nano-particle catalysts include platinum, ruthenium, palladium, rhodium, iridium, osmium and the like. The platinum alloy nano-particle catalysts include alloys of platinum with at least one metal selected from among ruthenium, palladium, rhodium, iridium, osmium, molybdenum, tin, cobalt, nickel, iron, chromium and the like. The platinum alloy should preferably contain at least 5% by weight, and more preferably at least 10% by weight of platinum.

The platinum group metal nano-particle catalysts and platinum alloy nano-particle catalysts used herein have a particle size (average particle diameter) of preferably up to 4 nm, more preferably 1 to 4 nm, and even more preferably 2 to 3.5 nm. A catalyst having a particle size in excess of 4 nm has a smaller specific surface area and is likely to raise a problem of lower catalytic activity. It is noted that the particle size is as observed under a transmission electron microscope.

The nano-particle catalysts used herein may be those supported on carbon, and commercially available catalysts may be used.

The nano-particle catalyst has a catalyst loading of 0.05 to 10 mg/cm$^2$, preferably 0.3 to 5.0 mg/cm$^2$ in each electrode catalyst layer. Too small a catalyst loading may fail to exert the catalytic effect whereas a catalyst loading in excess of 10 mg/cm$^2$ may provide a thicker catalyst layer to detract from the cell output.

The proton-conductive polymer electrolytes having a sulfonic acid group which are advantageously used herein include perfluoro electrolytes as typified by Nafion® (duPont), hydrocarbon electrolytes as typified by styrene sulfonic acid-butadiene copolymers, and inorganic/organic hybrid electrolytes as typified by sulfonic acid-containing alkoxysilane and terminally silylated oligomers. Further, carbon nano-particles having no catalyst supported thereon may be compounded for the purpose of improving electron conductivity.

Notably, to a catalyst paste from which the catalyst layer is formed, a solvent may be added for the purpose of improving coating operation when the catalyst paste is applied to the electrode and/or electrolyte membrane. Examples of the solvent include alcohols such as methyl alcohol, ethyl alcohol, n-propyl alcohol, isopropyl alcohol, n-butyl alcohol, ethylene glycol, and glycerol; ketones such as acetone and methyl ethyl ketone; esters such as ethyl acetate and butyl acetate; ethers such as tetrahydrofuran and dioxane; aromatic hydrocarbons such as benzene and toluene; aliphatic or alicyclic hydrocarbons such as n-heptane, n-hexane and cyclohexane; and polar solvents such as water, dimethyl sulfoxide, N,N-dimethylformamide, N,N-dimethylacetamide, formamide, N-methylformamide, N-methylpyrrolidone, ethylene carbonate, and propylene carbonate. These solvents may be used alone or in admixture of two or more. Of these, polar solvents such as isopropyl alcohol, water, and N,N-dimethylformamide are desirable.

Also a fluoropolymer may be added to the paste in order to increase the porosity of the catalyst layer to facilitate transfer of water. Suitable fluoropolymers include polytetrafluoroethylene (PTFE), tetrafluoroethylene-hexafluoropropylene copolymers (FEP), tetrafluoroethylene-perfluoroalkyl vinyl ether copolymers (PFA), polychlorotrifluoroethylene (PCTFE), ethylene-tetrafluoroethylene copolymers (ETFE), polyvinylidene fluoride (PVDF), polyvinyl fluoride (PVF), trifluoroethylene-ethylene copolymers (ECTFE), which may be used alone or in combination of two or more. As the fluoropolymer, commercially available resins having a number average molecular weight of the order of 100,000 to 600,000 as measured by gel permeation chromatography (GPC) versus polystyrene standards may be used.

Although the amounts of the foregoing components used vary over a wide range, the preferred amounts are 50 to 200 parts by weight of the proton-conductive polymer electrolyte, 0 to 5,000 parts by weight, more specifically 100 to 1,000 parts by weight of the solvent, and 10 to 400 parts by weight, more specifically 40 to 130 parts by weight of the fluoropolymer, relative to 100 parts by weight of the catalyst particles. From the catalyst paste described above, a catalyst layer is formed in a standard way by coating the paste onto the electrolyte membrane or porous electrode substrate, and if the solvent has been added to the paste, removing the solvent.

After the catalyst layer is formed on at least one of the electrolyte membrane and the electrode substrate, the electrolyte membrane having opposite surfaces may be sandwiched between electrode substrates and hot pressed together to construct a membrane-electrode assembly. While the hot pressing temperature may be selected as appropriate depending on the electrolyte membrane used or the type and blend ratio of fluoropolymer and other components in the catalyst paste used, the desired temperature range is from 50 to 200°C, and more desirably 80 to 180°C. Temperatures below 50°C may provide an insufficient joint whereas temperatures above 200°C may cause degradation of the electrolyte membrane or the resin component in the catalyst layer. While the applied pressure level may be selected as appropriate depending on the electrolyte membrane and/or the type and blend ratio of fluoropolymer and other components in the catalyst paste and the type of porous electrode substrate, the desired pressure range is from 1 to 100 kgf/cm$^2$, and more desirably 10 to 100 kgf/cm$^2$. Pressures below 1 kgf/cm$^2$ may provide an insufficient joint whereas pressures above 100 kgf/cm$^2$ may reduce the porosity of the catalyst layer and electrode substrate, leading to degraded performance.

The electrolyte membrane of the invention may be used as the solid polymer electrolyte membrane disposed between fuel and air electrodes in a fuel cell. When a catalyst layer/fuel diffusion layer and a separator are disposed on opposing surfaces of the solid polymer electrolyte membrane, the membrane is utilized as an effective electrolyte membrane, typically for direct methanol fuel cells. Thus a fuel cell having improved cell performance is obtainable. It is noted that the structure and materials of fuel and air electrodes and the structure of the fuel cell may be well-known ones.

EXAMPLE

Examples and Comparative Examples are given below for illustrating the invention, but the invention is not limited thereto.

Example 1 (not according to the invention)

Vinylbiphenyl grafting

Using a low voltage EB irradiation system (Light Beam L by Iwasaki Electric Co., Ltd.), an ethylene-tetrafluoroethylene copolymer film (ETFE film by Norton) having a length of 5 cm, a width of 6 cm and a thickness of 25 $\mu$m was irradiated in a nitrogen atmosphere with EB in a dose of 20 kGy (acceleration voltage 100 kV). In a 25-ml test tube equipped with a three-way cock, the EB-irradiated ETFE film, 4 g of vinylbiphenyl, 0.003 g of an initiator (azobisisobutyronitrile), and 20 g of toluene were fed. After nitrogen bubbling at room temperature for 1 hour, the three-way cock was closed. The tube was kept in an oil bath at 62°C for 16 hours to effect graft polymerization, yielding a vinylbiphenyl-grafted film.
Chlorosulfonic acid and dichloroethane were mixed to form a 3.5 mol/L chlorosulfonic acid/dichloroethane solution. In a 500-ml separable flask equipped with a Dimroth condenser, the vinylbiphenyl-grafted film and the 3.5 mol/L chlorosulfonic acid/dichloroethane solution were fed. The flask was kept in an oil bath at 50°C for 2 hours to effect chlorosulfonation, after which the film was washed with dichloroethane and deionized water and vacuum dried at 100°C for 2 hours. Then the chlorosulfonated vinylbiphenyl-grafted film was immersed in deionized water at 50°C for 24 hours, yielding a H type electrolyte membrane.

Example 2 (not according to the invention)

Vinylnaphthalene grafting

Using a low voltage EB irradiation system (Light Beam L by Iwasaki Electric Co., Ltd.), an ETFE film (by Norton) having a length of 5 cm, a width of 6 cm and a thickness of 25 $\mu$m was irradiated in a nitrogen atmosphere with EB in a dose of 20 kGy (acceleration voltage 100 kV). In a 25-ml test tube equipped with a three-way cock, the EB-irradiated ETFE film, 6 g of vinylnaphthalene, 0.003 g of an initiator (azobisisobutyronitrile), and 15 g of toluene were fed. After nitrogen bubbling at room temperature for 1 hour, the three-way cock was closed. The tube was kept in an oil bath at 62°C for 16 hours to effect graft polymerization, yielding a vinylnaphthalene-grafted film.
Chlorosulfonic acid and dichloroethane were mixed to form a 3.5 mol/L chlorosulfonic acid/dichloroethane solution. In a 500-ml separable flask equipped with a Dimroth condenser, the vinylnaphthalene-grafted film and the 3.5 mol/L chlorosulfonic acid/dichloroethane solution were fed. The flask was kept in an oil bath at 50°C for 2 hours to effect chlorosulfonation, after which the film was washed with dichloroethane and deionized water and vacuum dried at 100°C for 2 hours. Then the chlorosulfonated vinylnaphthalene-grafted film was immersed in deionized water at 50°C for 24 hours, yielding a H type electrolyte membrane.

Example 3 (not according to the invention)

Vinylbiphenyl/divinylbenzene co-grafting

Using a low voltage EB irradiation system (Light Beam L by Iwasaki Electric Co., Ltd.), an ETFE film (by Norton) having a length of 5 cm, a width of 6 cm and a thickness of 25 $\mu$m was irradiated in a nitrogen atmosphere with EB in a dose of 30 kGy (acceleration voltage 100 kV). In a 25-ml test tube equipped with a three-way cock, the EB-irradiated ETFE film, 4 g of vinylbiphenyl, 0.2 g of divinylbenzene, 0.003 g of an initiator (azobisisobutyronitrile), and 20 g of toluene were fed. After nitrogen bubbling at room temperature for 1 hour, the three-way cock was closed. The tube was kept in an oil bath at 62° C for 16 hours to effect graft polymerization, yielding a vinylbiphenyl/divinylbenzene-co-grafted film.
Chlorosulfonic acid and dichloroethane were mixed to form a 3.5 mol/L chlorosulfonic acid/dichloroethane solution. In a 500-ml separable flask equipped with a Dimroth condenser, the vinylbiphenyl/divinylbenzene-co-grafted film and the 3.5 mol/L chlorosulfonic acid/dichloroethane solution were fed. The flask was kept in an oil bath at 50°C for 2 hours to effect chlorosulfonation, after which the film was washed with dichloroethane and deionized water and vacuum dried at 100° C for 2 hours. Then the chlorosulfonated vinylbiphenyl/divinylbenzene-co-grafted film was immersed in deionized water at 50°C for 24 hours, yielding a H type electrolyte membrane.

Example 4

Vinylbiphenyl grafting (low sulfonation factor)

Using a low voltage EB irradiation system (Light Beam L by Iwasaki Electric Co., Ltd.), an ethylene-tetrafluoroethylene copolymer film (ETFE film by Norton) having a length of 5 cm, a width of 6 cm and a thickness of 25 $\mu$m was irradiated in a nitrogen atmosphere with EB in a dose of 30 kGy (acceleration voltage 100 kV). In a 25-ml test tube equipped with a three-way cock, the EB-irradiated ETFE film, 4 g of vinylbiphenyl, 0.003 g of an initiator (azobisisobutyronitrile), and 20 g of toluene were fed. After nitrogen bubbling at room temperature for 1 hour, the three-way cock was closed. The tube was kept in an oil bath at 62°C for 16 hours to effect graft polymerization, yielding a vinylbiphenyl-grafted film.
Chlorosulfonic acid and dichloroethane were mixed to form a 3.5 mol/L chlorosulfonic acid/dichloroethane solution. In a 500-ml separable flask equipped with a Dimroth condenser, the vinylbiphenyl-grafted film and the 3.5 mol/L chlorosulfonic acid/dichloroethane solution were fed. Chlorosulfonation was effected at 0° C for 2 hours, after which the film was washed with dichloroethane and deionized water and vacuum dried at 100°C for 2 hours. Then the chlorosulfonated vinylbiphenyl-grafted film was immersed in deionized water at 50°C for 24 hours, yielding a H type electrolyte membrane.

Example 5

Vinylbiphenyl grafting (low sulfonation factor)

Using a low voltage EB irradiation system (Light Beam L by Iwasaki Electric Co., Ltd.), an ethylene-tetrafluoroethylene copolymer film (ETFE film by Norton) having a length of 5 cm, a width of 6 cm and a thickness of 25 $\mu$m was irradiated in a nitrogen atmosphere with EB in a dose of 35 kGy (acceleration voltage 100 kV). In a 25-ml test tube equipped with a three-way cock, the EB-irradiated ETFE film, 4 g of vinylbiphenyl, 0.003 g of an initiator (azobisisobutyronitrile), and 20 g of toluene were fed. After nitrogen bubbling at room temperature for 1 hour, the three-way cock was closed. The tube was kept in an oil bath at 62° C for 16 hours to effect graft polymerization, yielding a vinylbiphenyl-grafted film.
Chlorosulfonic acid and dichloroethane were mixed to form a 1.0 mol/L chlorosulfonic acid/dichloroethane solution. In a 500-ml separable flask equipped with a Dimroth condenser, the vinylbiphenyl-grafted film and the 1.0 mol/L chlorosulfonic acid/dichloroethane solution were fed. Chlorosulfonation was effected at 0°C for 2 hours, after which the film was washed with dichloroethane and deionized water and vacuum dried at 100° C for 2 hours. Then the chlorosulfonated vinylbiphenyl-grafted film was immersed in deionized water at 50°C for 24 hours, yielding a H type electrolyte membrane.

Example 6

Vinylbiphenyl/divinylbenzene co-grafting (low sulfonation factor)

Using a low voltage EB irradiation system (Light Beam L by Iwasaki Electric Co., Ltd.), an ETFE film (by Norton) having a length of 5 cm, a width of 6 cm and a thickness of 25 $\mu$m was irradiated in a nitrogen atmosphere with EB in a dose of 50 kGy (acceleration voltage 100 kV). In a 25-ml test tube equipped with a three-way cock, the EB-irradiated ETFE film, 4 g of vinylbiphenyl, 0.2 g of divinylbenzene, 0.003 g of an initiator (azobisisobutyronitrile), and 20 g of toluene were fed. After nitrogen bubbling at room temperature for 1 hour, the three-way cock was closed. The tube was kept in an oil bath at 62°C for 16 hours to effect graft polymerization, yielding a vinylbiphenyl/divinylbenzene-co-grafted film.
Chlorosulfonic acid and dichloroethane were mixed to form a 3.5 mol/L chlorosulfonic acid/dichloroethane solution. In a 500-ml separable flask equipped with a Dimroth condenser, the vinylbiphenyl/divinylbenzene-co-grafted film and the 3.5 mol/L chlorosulfonic acid/dichloroethane solution were fed. Chlorosulfonation was effected at 0° C for 2 hours, after which the film was washed with dichloroethane and deionized water and vacuum dried at 100° C for 2 hours. Then the chlorosulfonated vinylbiphenyl/divinylbenzene-co-grafted film was immersed in deionized water at 50°C for 24 hours, yielding a H type electrolyte membrane.

Example 7

Vinylbiphenyl/divinylbenzene co-grafting (low sulfonation factor)

Using a low voltage EB irradiation system (Light Beam L by Iwasaki Electric Co., Ltd.), an ETFE film (by Norton) having a length of 5 cm, a width of 6 cm and a thickness of 25 $\mu$m was irradiated in a nitrogen atmosphere with EB in a dose of 40 kGy (acceleration voltage 100 kV). In a 25-ml test tube equipped with a three-way cock, the EB-irradiated ETFE film, 4 g of vinylbiphenyl, 0.1 g of divinylbenzene, 0.003 g of an initiator (azobisisobutyronitrile), and 20 g of toluene were fed. After nitrogen bubbling at room temperature for 1 hour, the three-way cock was closed. The tube was kept in an oil bath at 62°C for 16 hours to effect graft polymerization, yielding a vinylbiphenyl/divinylbenzene-co-grafted film. Chlorosulfonic acid and dichloroethane were mixed to form a 3.5 mol/L chlorosulfonic acid/dichloroethane solution. In a 500-ml separable flask equipped with a Dimroth condenser, the vinylbiphenyl/divinylbenzene-co-grafted film and the 3.5 mol/L chlorosulfonic acid/dichloroethane solution were fed. Chlorosulfonation was effected at 0° C for 2 hours, after which the film was washed with dichloroethane and deionized water and vacuum dried at 100°C for 2 hours. Then the chlorosulfonated vinylbiphenyl/divinylbenzene-co-grafted film was immersed in deionized water at 50° C for 24 hours, yielding a H type electrolyte membrane.

Comparative Example 1

Styrene grafting

Using a low voltage EB irradiation system (Light Beam L by Iwasaki Electric Co., Ltd.), an ETFE film (by Norton) having a length of 5 cm, a width of 6 cm and a thickness of 25 $\mu$m was irradiated in a nitrogen atmosphere with EB in a dose of 1.5 kGy (acceleration voltage 100 kV). In a 25-ml test tube equipped with a three-way cock, the EB-irradiated ETFE film, 12 g of styrene, 0.003 g of an initiator (azobisisobutyronitrile), and 12 g of toluene were fed. After nitrogen bubbling at room temperature for 1 hour, the three-way cock was closed. The tube was kept in an oil bath at 62° C for 16 hours to effect graft polymerization.
Chlorosulfonic acid and dichloroethane were mixed to form a 3.5 mol/L chlorosulfonic acid/dichloroethane solution. In a 500-ml separable flask equipped with a Dimroth condenser, the styrene-grafted film and the 3.5 mol/L chlorosulfonic acid/dichloroethane solution were fed. The flask was kept in an oil bath at 50° C for 2 hours to effect chlorosulfonation, after which the film was washed with dichloroethane and deionized water and vacuum dried at 100°C for 2 hours. Then the chlorosulfonated styrene-grafted film was immersed in deionized water at 50° C for 24 hours, yielding a H type electrolyte membrane.

Evaluation of membrane properties

The electrolyte membranes of Examples 1 to 7 and Comparative Example 1 were examined for various properties by the following tests. The results of graft rate, sulfonation factor, and ion conductivity are reported in Table 1, and the test results of oxidation resistance are shown in FIG. 1.

(1) Graft rate

From a weight change of the film before and after grafting, a graft rate was determined according to the following formula.

```
graft rate (%) =
    [(film weight after grafting)-
        (film weight before grafting)]/
            (film weight before grafting) × 100
```

(2) Sulfonation factor

A sulfonation factor was determined according to the following formula.

```
sulfonation factor =
        (the number of sulfonic acid groups)/
               (the number of aromatic rings grafted)
```

(3) Ion conductivity

Using an impedance analyzer (model 1260 by Solartron Analytical), the film resistance in longitudinal direction of a strip sample (1 cm wide) was measured at room temperature according to the four-terminal AC impedance method.

(4) Oxidation resistance

A weight loss of an electrolyte membrane was determined before and after immersion in 3% aqueous hydrogen peroxide at 80°C.

```
Weight loss (%) =
 [(dry weight after aqueous hydrogen peroxide immersion)-
   (dry weight before aqueous hydrogen peroxide immersion)]/
      (dry weight before aqueous hydrogen peroxide immersion)
                                                   × 100
```

Table 1

|  | Graft rate, Sulfonation % | factor | Ion conductivity, S/cm |
|---|---|---|---|
| Example 1 * | 30 | 0.91 | 0.11 |
| Example 2 * | 36 | 1.00 | 0.12 |
| Example 3 * | 51 | 0.86 | 0.10 |
| Example 4 | 50 | 0.63 | 0.09 |
| Example 5 | 61 | 0.47 | 0.11 |
| Example 6 | 80 | 0.59 | 0.07 |
| Example 7 | 65 | 0.63 | 0.09 |
| Comparative Example 1 | 30 | 1.00 | 0.13 |
| * not according to the invention | | | |

**Claims**

1.  A solid polymer electrolyte membrane obtained by graft-polymerizing one or more radically polymerizable monomers to a resin membrane which has been irradiated with radiation, and said one or more radically polymerizable monomers comprising a monofunctional monomer having one alkenyl group and a plurality of aromatic rings, **characterized in that** the aromatic ring is partially sulfonated, and a sulfonation factor, defined as the number of sulfonic acid groups divided by the number of aromatic said one or more radically polymerizable monomers rings grafted, is 0.3 to 0.7.

2.  A solid polymer electrolyte membrane according to claim 1 wherein the resin membrane is at least one member selected from the group consisting of

polytetrafluoroethylene, tetrafluoroethylene-perfluoroalkyl vinyl ether copolymers, tetrafluoroethylene-hexafluoropropylene copolymers, and ethylene-tetrafluoroethylene copolymers.

3. A solid polymer electrolyte membrane according to claim 1 or 2 wherein the monofunctional monomer having one alkenyl group and a plurality of aromatic rings is vinylbiphenyl.

4. A solid polymer electrolyte membrane according to any one of claims 1 to 3 wherein said one or more radically polymerizable monomers further comprises a radically polymerizable polyfunctional monomer having two or more radical reactive groups.

5. A method for preparing a solid polymer electrolyte membrane, comprising irradiating a resin membrane with radiation and graft-polymerizing one or more radically polymerizable monomers to the resin membrane, said one or more radically polymerizable monomers comprising a monofunctional monomer having one alkenyl group and a plurality of aromatic rings, **characterized in that** the aromatic ring is partially sulfonated, and a sulfonation factor, defined as the number of sulfonic acid groups divided by the number of aromatic said one or more radically polymerizable monomers rings grafted, is 0.3 to 0.7.

6. A method for preparing a solid polymer electrolyte membrane according to claim 5 wherein the resin membrane is at least one member selected from the group consisting of polytetrafluoroethylene, tetrafluoroethylene-perfluoroalkyl vinyl ether copolymers, tetrafluoroethylene-hexafluoropropylene copolymers, and ethylene-tetrafluoroethylene copolymers.

7. A method for preparing a solid polymer electrolyte membrane according to claim 5 or 6 wherein the monofunctional monomer having one alkenyl group and a plurality of aromatic rings is vinylbiphenyl.

8. A method for preparing a solid polymer electrolyte membrane according to any one of claims 5 to 7 wherein said one or more radically polymerizable monomers further comprises a radically polymerizable polyfunctional monomer having two or more radical reactive groups.

9. A membrane-electrode assembly for use in fuel cells, **characterized in that** the solid polymer electrolyte membrane of any one of claims 1 to 4 is disposed between a fuel electrode and an air electrode.

10. A fuel cell **characterized by** comprising the membrane electrode assembly of claim 9.

11. A fuel cell according to claim 10 which is of direct methanol type using methanol as the fuel.

**Patentansprüche**

1. Festpolymerelektrolytmembran, erhalten durch Pfropfpolymerisierung eines oder mehrerer radikalisch polymerisierbarer Monomere an eine Harzmembran, die mit Strahlung bestrahlt wird, und wobei das eine oder die mehrere radikalisch polymerisierbaren Monomere ein monofunktionelles Monomer mit einer Alkenylgruppe und einer Anzahl an aromatischen Ringen umfassen, **dadurch gekennzeichnet, dass** der aromatische Ring teilweise sulfoniert ist und ein Sulfonierungsfaktor, definiert als die Anzahl Sulfonsäuregruppen, geteilt durch die Anzahl gepfropfte aromatische Ringe, 0,3 bis 0,7 beträgt.

2. Festpolymerelektrolytmembran nach Anspruch 1, wobei die Harzmembran mindestens ein Element aus der Gruppe Polytetrafluorethylen, Tetrafluorethylen-Perfluoralkylvinylether-Copolymere, Tetrafluorethylen-Hexafluorpropylen-Copolymere und Ethylen-Tetrafluorethylen-Copolymere ist.

3. Festpolymerelektrolytmembran nach Anspruch 1 oder 2, wobei das monofunktionelle Monomer mit einer Alkenylgruppe und einer Anzahl an aromatischen Ringen Vinylbiphenyl ist.

4. Festpolymerelektrolytmembran nach einem der Ansprüche 1 bis 3, wobei das eine oder die mehrere radikalisch polymerisierbaren Monomere zudem ein radikalisch polymerisierbares polyfunktionelles Monomer mit zwei oder mehr radikalisch wirkenden Gruppen umfassen.

5. Herstellungsverfahren für eine Festpolymerelektrolytmembran, umfassend Bestrahlung einee Harzmembran mit Strahlung und Pfropfpolymerisierung eines oder mehrerer radikalisch polymerisierbarer Monomere an die Harzmembran, wobei das eine oder die mehreren radikalisch polymerisierbaren Monomere ein monofunktionelles Monomer mit einer Alkenylgruppe und einer Anzahl an aromatischen Ringen umfassen, **dadurch gekennzeichnet, dass** der aromatische Ring teilweise sulfoniert ist und ein Sulfonierungsfaktor, definiert als die Anzahl Sulfonsäuregruppen, geteilt durch die Anzahl gepfropfte aromatische Ringe, 0,3 bis 0,7 beträgt.

6. Herstellungsverfahren für eine Festpolymerelektrolytmembran nach Anspruch 5, wobei die Harzmembran mindestens ein Element der Gruppe Polytetrafluorethylen, Tetrafluorethylen-Perfluoralkylvinylether-Copolymere, Tetrafluorethylen-Hexafluorpropylen-Copolymere und Ethylen-Tetrafluorethylen-Copolymere ist.

7. Herstellungsverfahren für eine Festpolymerelektrolytmembran nach Anspruch 5 oder 6, wobei das monofunktionelle Monomer mit einer Alkenylgruppe und einer Anzahl an aromatischen Ringen Vinylbiphenyl ist.

8. Herstellungsverfahren für eine Festpolymerelektrolytmembran nach einem der Ansprüche 5 bis 7, wobei das eine oder die mehreren radikalisch polymerisierbaren Monomere zudem ein radikalisch polymerisierbares polyfunktionelles Monomer mit zwei oder mehr radikalisch wirkenden Gruppen umfassen.

9. Membranelektroden-Baugruppe für die Verwendung in Brennstoffzellen, **dadurch gekennzeichnet, dass** die Festpolymerelektrolytmembran nach einem der Ansprüche 1 bis 4 sich zwischen einer Brennstoffelektrode und einer Luftelektrode befindet.

10. Brennstoffzelle, **dadurch gekennzeichnet, dass** sie die Membranelektroden-Baugruppe nach Anspruch 9 umfasst.

11. Brennstoffzelle nach Anspruch 10, die eine Methanol-Brennstoffzelle ist und Methanol als Brennstoff verwendet.

**Revendications**

1. Membrane électrolytique polymère solide obtenue par polymérisation par greffage d'un ou plusieurs monomères aptes à la polymérisation radicalaire à une membrane en résine qui a été irradiée avec un rayonnement, et ledit ou lesdits monomères aptes à la polymérisation radicalaire comprenant un monomère monofonctionnel ayant un groupe alcényle et une pluralité de noyaux aromatiques, **caractérisée en ce que** le noyau aromatique est partiellement sulfoné, le facteur de sulfonatation, défini par le nombre de groupes acide sulfonique divisé par le nombre de noyaux aromatiques greffés, allant de 0,3 à 0,7.

2. Membrane électrolytique polymère solide suivant la revendication 1, dans laquelle la membrane en résine est constituée d'au moins un membre choisi dans le groupe consistant en le polytétrafluoréthylène, des copolymères tétrafluoréthylène-éther vinylique de perfluoralkyle, des copolymères tétrafluoréthylène-hexafluoropropylène et des copolymères éthylène-tétrafluoréthylène.

3. Membrane électrolytique polymère solide suivant la revendication 1 ou 2, dans laquelle le monomère monofonctionnel ayant un groupe alcényle et une pluralité de noyaux aromatiques est un monomère vinylbiphényle.

4. Membrane électrolytique polymère solide suivant l'une quelconque des revendications 1 à 3, dans laquelle ledit ou lesdits monomères aptes à la polymérisation radicalaire comprennent en outre un monomère polyfonctionnel apte à la polymérisation radicalaire comprenant deux ou plus de deux groupe réactifs par radicaux.

5. Procédé pour préparer une membrane électrolytique polymère solide, comprenant l'irradiation d'une membrane en résine avec un rayonnement et la polymérisation par greffage d'un ou plusieurs monomères aptes à la polymérisation radicalaire à la membrane en résine, ledit ou lesdits monomères aptes à la polymérisation radicalaire comprenant un monomère monofonctionnel ayant un groupe alcényle et une pluralité de noyaux aromatiques, **caractérisé en ce que** le noyau aromatique est partiellement sulfoné, le facteur de sulfonatation, défini par le nombre de groupes acide sulfonique divisé par le nombre de noyaux aromatiques greffés, allant de 0,3 à 0,7.

6. Procédé pour préparer une membrane électrolytique polymère solide suivant la revendication 5, dans lequel la membrane en résine est constituée d'au moins un membre choisi dans le groupe consistant en le polytétrafluoréthylène, des copolymères tétrafluoréthylène-éther vinylique de perfluoralkyle, des copolymères tétrafluoréthylène-hexafluoropropylène et des copolymères éthylène-tétrafluoréthylène.

7. Procédé pour préparer une membrane électrolytique polymère solide suivant la revendication 5 ou 6, dans lequel le monomère monofonctionnel ayant un groupe alcényle et une pluralité de noyaux aromatiques et un monomère vinylbiphényle.

8. Procédé pour préparer une membrane électrolytique polymère solide suivant l'une quelconque des revendications 5 à 7, dans lequel ledit ou lesdits monomères aptes à la polymérisation radicalaire comprennent en outre un monomère polyfonctionnel apte à la polymérisation radicalaire ayant deux ou plus de deux groupes réactifs par radicaux.

9. Assemblage membrane-électrodes pour son utilisation dans des piles à combustible, **caractérisé en ce que** la membrane électrolytique polymère solide de l'une quelconque des revendications 1 à 4 est placée entre une électrode à combustible et une électrode à air.

10. Pile à combustible, **caractérisée en qu'**elle comprend l'assemblage membrane-électrodes de la revendication 9.

11. Pile à combustible suivant la revendication 10, qui est du type direct à méthanol, utilisant du méthanol comme combustible.

# Fig. 1

3% aqueous hydrogen peroxide @80°C

Legend:
- Example 1 *
- Example 2 *
- Example 3 *
- Example 4
- Example 5
- Example 6
- Example 7
- Comparative Example 1

* not according to the invention

(Y-axis: Weight loss (%), X-axis: Immersion time (hr))

13

**EP 2 202 832 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001348439 A
- JP 2002313364 A
- JP 2003062129 A
- JP 2006313659 A